**Europäisches Patentamt**

**European Patent Office**

**Office européen des brevets**

(11) Veröffentlichungsnummer: **0 163 980**
**B1**

(12) ## EUROPÄISCHE PATENTSCHRIFT

(45) Veröffentlichungstag der Patentschrift:
30.03.88

(51) Int. Cl.⁴: **F 16 F 1/38, B 60 G 11/12**

(21) Anmeldenummer: **85105734.9**

(22) Anmeldetag: **10.05.85**

(54) **Elastisches Gelenk, Kupplung oder dergleichen.**

(30) Priorität: **29.05.84 DE 3419967**

(43) Veröffentlichungstag der Anmeldung:
**11.12.85 Patentblatt 85/50**

(45) Bekanntmachung des Hinweises auf die Patenterteilung:
**30.03.88 Patentblatt 88/13**

(84) Benannte Vertragsstaaten:
**AT BE DE FR GB IT NL SE**

(56) Entgegenhaltungen:
**EP - A - 0 033 362**
**FR - A - 1 318 007**
**FR - A - 2 072 826**
**GB - A - 637 901**
**GB - A - 1 078 641**
**US - A - 1 895 663**
**US - A - 1 983 796**

(73) Patentinhaber: **Boge A.G., Bogestrasse 50,**
**D-5208 Eitorf/Sieg (DE)**
Patentinhaber: **TRW Ehrenreich GmbH & Co. KG,**
**Hansa-Allee 190, D-4000 Düsseldorf 11 (DE)**

(72) Erfinder: **Brenner, Heinz, Ing.-grad., Am Thurmberg 11,**
**D-5483 Ahrweiler (DE)**
Erfinder: **Hüsch, Bruno, Himmelsburger Strasse 159,**
**D-5483 Bad Neuenahr/Ahrweiler (DE)**
Erfinder: **Gollub, Erwin, Erlenstrasse 9,**
**D-4040 Neuss 25 (DE)**

## Beschreibung

Die Erfindung bezieht sich auf ein elastisches Gelenk, Kupplung oder dergleichen mit einem metallischen Innenteil, wie einer Gelenkkugel oder einer zylindrischen Büchse, einem mit diesem festhaftend verbundenen gummielastischen Körper, welcher von einem im wesentlichen zylindrischen metallischen Aussenteil, wie einer zylindrischen Büchse oder einem Gelenkauge umgeben und mit diesem mittels einer, aus verschleissfestem Kunststoff bestehenden, mit dem gummielastischen Körper fest verbundenen Hülse durch Reibungshaftung verbunden ist.

Es sind Gelenke bekannt (z.B. DE-A-3004075), die an der äusseren Umfangsfläche des gummielastischen Körpers ein Drahtgewebe zur Erhöhung der Reibungshaftung aufweisen. Dabei wird zwar die Oberfläche des gummielastischen Körpers verfestigt und die Lebendsdauerwerte erreichen eine bedeutende Steigerung, jedoch die Herstellung des Drahtgewebes und auch das Einlegen in die Vulkanisierform bereitet wegen der Instabilität des Drahtgewebes Schwierigkeiten. Darüber hinaus entstehen in der Fertigung weitere Schwierigkeiten dadurch, dass die beiden Axialdruckscheiben mit Hilfe von Magneten in die Form eingelegt werden müssen, so dass nach dem Zusammenfügen der Vulkanisierform die Einhaltung wichtiger Toleranzen nur unter schwierigen Bedingungen möglich ist und die Gefahr von Fehlern und Ausschuss steigt. Eine Sicherung der Axialdruckscheiben durch entsprechende Sicherungsscheiben bzw. Ringe ist ebenfalls erforderlich.

Nachteilig hat sich bei der Verwendung eines derartig bekannten Drahtgewebes herausgestellt, dass nach dem Einbringen in das metallische Aussenteil aufgrund der kreuzweise übereinanderliegenden Drähte nur eine Linienbewegung vorhanden war. Nach einer entsprechenden Betriebsdauer wurde ein Verschleiss aufgrund der Linienberührung hervorgerufen, so dass schliesslich der Bruch des Drahtgewebes erfolgte und das Gelenk zum Ausfall kam.

Darüber hinaus sind Lager bekannt (z.B. GB-A-637901), bei denen zwischen einem metallischen Innenteil und einem metallischen Aussenteil ein gummielastischer Körper vorgesehen ist, wobei auf einer Seite des gummielastischen Körpers eine Gleithülse aus Metall oder Kunststoff angeordnet ist, die mit dem Gummiteil z.B. auch verklebt sein kann. Bei übermässiger Verdrehbeanspruchung soll diese Hülse durchrutschen können. Zur besseren Montage ist diese Gleithülse in Längsrichtung geteilt. Hierbei ist von Nachteil, dass die radialen Kräfte nicht ohne weiteres aufgebracht werden können.

Als weiteres sind bereits elastische Gelenke bekannt (z.B. US-A-1983796), die aus einer Innenhülse und einer Aussenhülse mit dazwischenliegendem, unter Vorspannung stehenden Gummikörper besteht. Durch den eingepressten Gummikörper sowohl am Innen- als auch am Aussenteil lassen sich nur Verdrehwinkel bis zur Höhe des Schubwinkels des Gummis erzielen. Bei Überschreiten dieses Schubwinkels entsteht eine Reibung zwischen dem Gummi und den metallischen Hülsen, der den Gummi beschädigt. Zur Erhöhung der Vorspannung ist eine radiale Verkleinerung der Aussenhülse vorgesehen, wobei das Umbördeln der Endbereiche sowohl als Schutz der Stirnflächen des gummielastischen Körpers als auch des Aufbringens einer weiteren axial gerichteten Kraft dient.

Hiervon ausgehend ist es Aufgabe der Erfindung, ein einfaches und wirksames Gelenk, Kupplung oder dergleichen zu schaffen, welches bei einfacher Montage eine kompakte Bauweise hat, radial und axial belastbar ist, wobei zusätzlich kardanische Auslenkungen im Grössenbereich von 10 bis 15 Grad und Verdrehwinkel, welche grösser als der für den Gummikörper zulässige Schubwinkel sind, problemlos ausgeführt werden können und eine Verbesserung der Lebensdauer erzielt wird.

Zur Lösung dieser Aufgabe ist erfindungsgemäss vorgesehen, dass die in sich geschlossene Hülse in einem Mittelbereich der Oberfläche des gummielastischen Körpers eingelassen und mit dem Körper durch Vulkanisation verbunden ist und dass der Körper und die Hülse in das im Durchmesser kleinere metallische Aussenteil eingepresst sind, wobei die Endbereiche des metallischen Aussenteiles radial nach innen verformt sind und den gummielastischen Körper axial vorspannen, und dass durch die Verformung der Endbereiche des metallischen Aussenteiles und der Endbereiche des gummielastischen Körpers eine Abdichtung des Innenraumes erfolgt.

Bei dieser Ausführung ist von Vorteil, dass eine kompakte Bauweise ohne zusätzliche axiale Druckscheiben und Sicherungsringe möglich ist und dass durch eine leichte Montage und Demontage sowie einer vereinfachten Herstellung ein wirtschaftliches Gelenk vorhanden ist. Durch die mit einer verhältnismässig glatten Aussenfläche versehenen Hülse ist eine sehr gute Verspannung erzielbar. Diese Verspannung wird erreicht, indem der Gummikörper zusammen mit der Hülse bei radialer Vorspannung in das metallische Aussenteil gebracht wird. D.h., dass die Vorspannung durch das metallische Aussenteil erzeugt wird, da der Durchmesser kleiner ist als der des gummielastischen Körpers zusammen mit der Hülse. Zusätzlich wird anschliessend durch axiales Verspannen eine weitere radiale Kraft erzeugt, so dass die gewünschte Kraftschlüssigkeit erzielt werden kann.

Da die Hülse aus einem Kunststoff hergestellt ist und mit dem gummielastischen Körper durch Vulkanisation verbunden ist, kommt nicht nur ein nachgiebiger hochverschleissfester Werkstoff zur Anwendung, sondern zusätzlich ist die feste Verbindung mit dem gummielastischen Körper durch Vulkanisation hergestellt. Durch die Verformung der Endbereiche des metallischen Aussenteiles und der Endbereiche des gummielastischen Körpers erfolgt eine Abdichtung des Innenraumes, so dass ein Eindringen von Schmutz von aussen nicht möglich ist, da durch das Einbördeln des Aussenteiles eine ständige axiale Vorspannung erreicht wird, die die Abdichtung gewährleistet.

Zwischen der Hülse und dem metallischen Aussenteil ist eine kraftschlüssige Verbindung vorgesehen, die durch radiale und axiale Verspannung und den Reibwert bestimmt ist, so dass grössere als für den Gummikörper zulässige Schubwinkel und Verdrehwinkel durch kontrolliertes Gleiten ausgeführt werden können.

Ein derartiges kontrolliertes Gleiten der Hülse zusammen mit dem Innenteil ist ebenfalls gewährleistet, wenn die Innenfläche des metallischen Aussenteiles und/oder die Aussenfläche der Hülse mit einem Dauerschmiermittel oder einem Gleitlack versehen ist, wobei für das Dauerschmiermittel Ausnehmungen, partielle Vertiefungen oder dergleichen vorgesehen sind.

Elastische Gelenke oder Kupplungen dieser Art werden dort angewendet, wo hohe Radiallasten bei überhöhten Verdrehwinkeln auftreten, wie z. B. in Querlenkern, Schräglenkern, Achsstreben, Federlagerungen, Schwingenlagerungen etc. bei PKW, LKW, Omnibussen oder auch Schienenfahrzeugen und können komplett in einer Aufnahme ohne eine zusätzliche axiale Sicherung eingebaut werden, dabei lassen sie sich im Reparaturbedarf leicht auswechseln.

Die Erfindung wird nachstehend anhand eines in der Zeichnung schematisch dargestellten Ausführungsbeispieles näher erläutert.
Es zeigt:

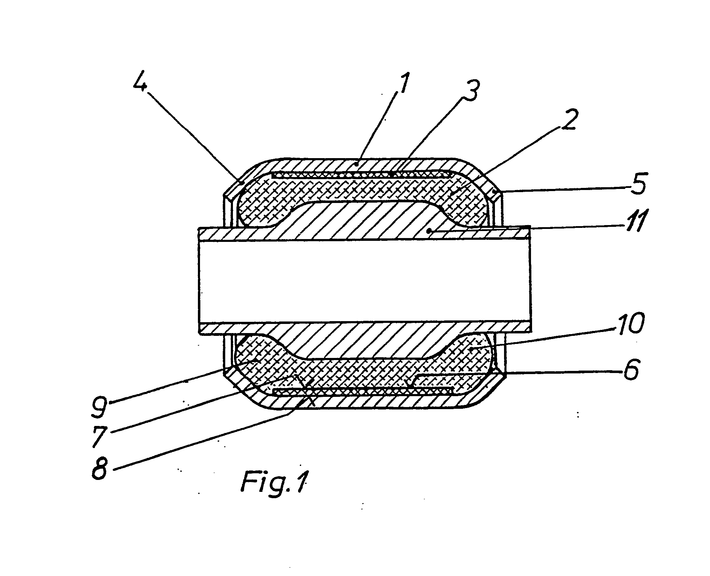

Figur 1 eine Ausführungsform eines elastischen Drehgelenkes im Schnitt.

Das elastische Gelenk nach der Figur 1 weist ein metallisches Innenteil 11 auf, mit welchem durch Vulkanisation ein gummielastischer Körper 2 festhaftend verbunden ist. Der gummielastische Körper 2 ist von einem im wesentlichen zylindrischen metallischen Aussenteil 1 umgeben und mit diesem durch radiales und axiales Zusammenspannen der Endbereiche 4 und 5 durch Reibungshaftung verbunden.

Zur Verbesserung der Dauerhaltbarkeit der äusseren Umfangsfläche des gummielastischen Körpers 2 ist eine aus einem hochabriebfesten Werkstoff hergestellte Hülse 3 vorgesehen. Diese Hülse 3 ist nachgiebig und mit dem gummielastischen Körper 2 durch Vulkanisation fest verbunden. Die Hülse 3 ist nur über einen Teilbereich des gummielastischen Körpers 2 angeordnet und in die Oberfläche 6 des gummielastischen Körpers 2 eingelassen.

Die Hülse 3 ist zusammen mit dem gummielastische Körper 2 in das im Durchmesser kleinere metallische Aussenteil 1 eingebracht, so dass eine radiale Kraft durch Zusammenpressen der Hülse 3 und des gummielastischen Körpers 2 entstanden ist. Zusätzlich werden die Endbereiche 4 und 5 durch Rollen oder Umbördeln verformt, so dass durch das axiale Verspannen eine weitere radiale Kraftkomponente erzeugt wird.

Um die Verdrehbeanspruchung zusätzlich günstig abfangen zu können, kann entweder die Innenfläche 7 des metallischen Aussenteiles 1 oder auch die Aussenfläche 8 der Hülse 3 mit einem Dauerschmiermittel oder einem Gleitlack versehen werden. Dabei wird eine Verdrehbeanspruchung, bei der sich aufgrund des geringen Gummiquerschnittes hohe Schubwinkel einstellen, vermieden.

## Patentansprüche

1. Elastisches Gelenk, Kupplung oder dergleichen mit einem metallischen Innenteil (11), wie einer Gelenkkugel oder einer zylindrischen Büchse, einem mit diesem festhaftend verbundenen gummielastischen Körper (2), welcher von einem im wesentlichen zylindrischen metallischen Aussenteil (1), wie einer zylindrischen Büchse oder einem Gelenkauge umgeben und mit diesem mittels einer, aus verschleissfestem Kunststoff bestehenden, mit dem gummielastischen Körper fest verbundenen Hülse (3) durch Reibungshaftung verbunden ist, dadurch gekennzeichnet, dass die in sich geschlossene Hülse (3) in einem Mittenbereich der Oberfläche (6)·des gummielastischen Körpers (2) eingelassen und mit dem Körper durch Vulkanisation verbunden ist und dass der Körper (2) und die Hülse (3) in das im Durchmesser kleinere metallische Aussenteil (1) eingepresst sind, wobei die Endbereiche (4, 5) des metallischen Aussenteiles (1) radial nach innen verformt sind und den gummielastischen Körper (2) axial vorspannen und dass durch die Verformung der Endbereiche (4, 5) des metallischen Aussenteiles (1) und der Endbereiche (9, 10) des gummielastischen Körpers eine Abdichtung des Innenraumes erfolgt.

2. Elastisches Gelenk nach Anspruch 1, dadurch gekennzeichnet, dass die Innenfläche (7) des metallischen Aussenteiles (1) und/oder die Aussenfläche (8) der Hülse (3) mit einem Dauerschmiermittel oder einem Gleitlack versehen ist, wobei für das Dauerschmiermittel Ausnehmungen, partielle Vertiefungen oder dergleichen vorgesehen sind.

## Claims

1. Elastic joint, coupling or the like with a metallic inner component (11) such as a ball joint or a cylindrical bush, an elastic rubber body (2) permanently bonded to it, and which is surrounded by a substantially cylindrical metallic outer component (1) such as a cylindrical bush or an eye of a joint and is connected to it by frictional adhesion by means of a sleeve (3) made of wear-resistant plastics and permanently connected to the elastic rubber body, characterised in that the sleeve (3), in itself closed, is inserted in a central region of the surface (6) of the elastic rubber body (2) and connected to the body by vulcanising and that the body (2) and the sleeve (3) are pressed into the metallic outer component (1) of smaller diameter, the end regions (4, 5) of the metallic outer component (1) being deformed radially inwards and the elastic body (2) being axially pre-loaded and that a sealing action on the interior is achieved by the deformation of the end regions (4, 5) of the metallic outer component (1) and the end regions (9, 10) of the elastic body.

2. Elastic joint according to Claim 1, characterised in that the inner surface (7) of the metallic outer component (1) and/or the outer surface (8) of the sleeve (3) is provided with a long-term lubricant or a sliding lacquer, recesses, partial cavities or the like being provided for the long-term lubricant.

## Revendications

1. Articulation, accouplement ou analogue, élastique, comportant: une partie intérieure métallique (11), telle qu'une sphère d'articulation ou un manchon cylindrique; un corps élastique en caoutchouc (2) solidarisé par adhérence à celle-ci, ce corps étant entouré par une partie extérieure métallique sensiblement cylindrique (1), telle qu'un manchon cylindrique ou un oeil d'articulation, à laquelle il est solidarisé par adhérence de frottement au moyen d'un manchon (3) en matière plastique résistant à l'usure, solidarisé au corps élastique en caoutchouc, caractérisée par le fait que le manchon (3), fermé en soi, est inséré dans une région médiane de la surface (6) du corps élastique en caoutchouc (2) et est solidarisé à ce corps par vulcanisation, par le fait que ce corps (2) et le manchon (3) sont enserrés dans la partie extérieure métallique (1) dotée d'un plus petit diamètre, les zones des extrémités (4, 5) de la partie métallique extérieure (1) étant déformées radialement vers l'intérieur et précontraignant axialement le corps élastique en caoutchouc (2), et par le fait que l'espace intérieur est rendu étanche par la déformation des zones des extrémités (4, 5) de la partie métallique extérieure (1) et des zones des extrémités (9, 10) du corps élastique en caoutchouc.

2. Articulation élastique selon revendication 1, caractérisée par le fait que la surface intérieure (7) de la partie extérieure métallique (1) et/ou la surface extérieure (8) du manchon (3) est munie d'un lubrifiant permanent ou d'une laque glissante, des évidements, dépressions partielles ou analogues étant prévus pour le lubrifiant permanent.

Fig.1